# EUROPEAN PATENT SPECIFICATION

(11) **EP 2 763 811 B1**
(45) Date of publication and mention of the grant of the patent: **16.12.2015**
(21) Application number: 12794480.9
(22) Date of filing: 05.10.2012
(51) Int. Cl.: B23F 21/26, B23F 1/08, B23D 37/10, B23D 41/02, B23D 43/04

(54) **SYSTEM FOR THE INTERNAL BROACHING OF A CYLINDRICAL BORE**
SYSTEM ZUR INTERNEN RÄUMUNG EINER ZYLINDRISCHEN BOHRUNG
SYSTEME POUR LE BROCHAGE INTERNE D'UN ALESAGE CYLINDRIQUE

(30) Priority: 06.10.2011 IT BO20110575
(43) Date of publication of application: 13.08.2014
(73) Proprietor: Bonfiglioli Riduttori S.p.A., 40012 Calderara di Reno (IT)
(72) Inventor: AURUCCI, Antonio, I-48022 Lugo (IT); MURATORI, Roberto, I-47121 Forli (IT)
(74) Representative: Boggio, Luigi
(86) International application number: PCT/IB2012/055387
(87) International publication number: WO 2013/061188

(56) References cited:
- EP-A1- 1 477 255
- DE-A1-102005 037 790

## Description

### TECHNICAL FIELD

The present invention relates to an innovative system for the internal broaching of a cylindrical bore.

### BACKGROUND ART

As is known, for the broached pieces the complete cycle generally provides a first preparation lathing operation, a second broaching operation and a third finish lathing operation of the outer cylindrical surface of the piece that has been broached.

The third finish lathing operation is aimed to ensure that the circumference which encompasses the outer surface is concentric with the circumference which encompasses the ends of the teeth that were obtained by broaching.

### DISCLOSURE OF INVENTION

The present invention seeks to remove this third step which results in a considerable additional cost.

Obviously, the elimination of this operation must not be at the expense of a good concentricity between the pre-hole and the broached evolvent.

Therefore, in accordance with the present invention, a system as defined in claim 1 is provided, and preferably, in any claims depending directly or indirectly on the mentioned claim 1.

### BRIEF DESCRIPTION OF THE DRAWINGS

For a better understanding of the present invention, a preferred embodiment will now be described, purely by way of non-limiting example and with reference to the accompanying drawings, wherein:
- Figure 1 illustrates an assembly of the system object of the present invention;
- Figure 2 shows an enlargement of a first detail of a broach; and

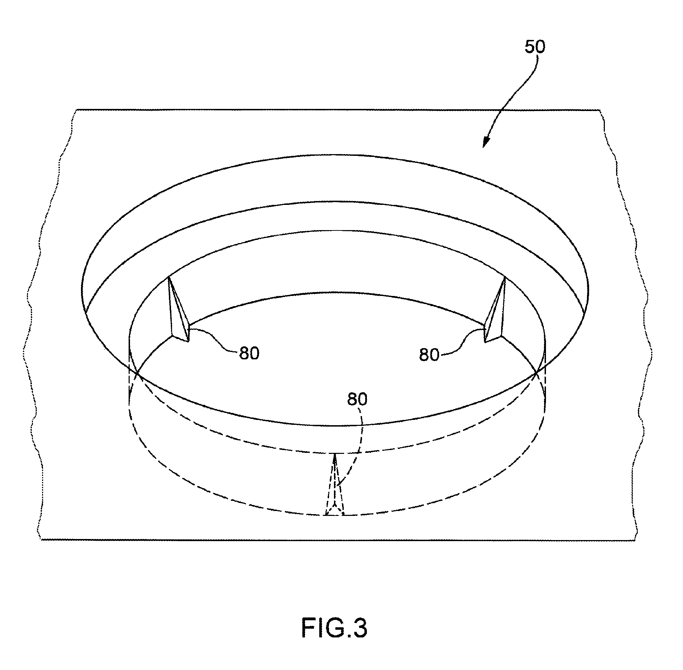

- Figure 3 shows an enlargement of a second detail of a piece bearing table.

### BEST MODE FOR CARRYING OUT THE INVENTION

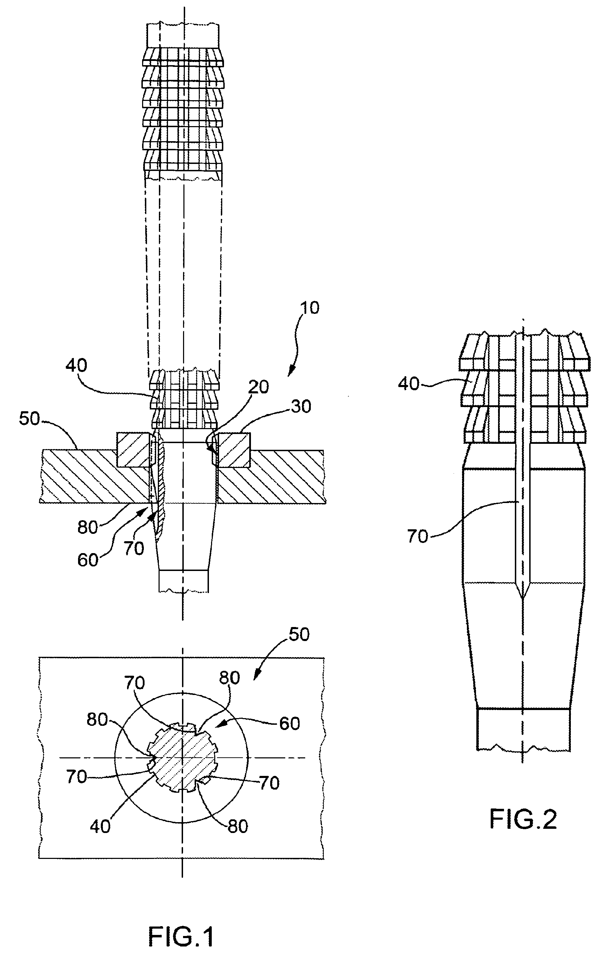

In Figure 1, with number 10 is indicated, as a whole, a system according to the present invention.

The system 10 is used to perform precision broaching of a cylindrical bore 20 which are previously obtained on a piece 30.

The system 10 comprises a broach 40 and a piece bearing table 50 which is suited to support the piece 30 to be machined. The system 10 is characterized in that a guiding and coupling device 60 is arranged between the broach 40 and the piece bearing table 50 so as to guide the broach 40 during the broaching operations.

In the embodiment shown in the attached figures the device 60 is given by the set of three slits 70 (Figure 2), which are obtained on the broach 40, and are able to be coupled with three wedges 80 arranged on the piece bearing table 50.

The three slits 70 (and therefore also the three wedges 80) are spaced apart by 120°.

According to a further embodiment of the present invention, not shown, the wedges are integral with the broach, while the three guide slits have been obtained on the piece bearing table.

It is obvious that any guiding and coupling system between a broach and a piece bearing table is within the teachings of the present invention.

The main advantages of the system object of the present invention are the following:
- simplicity of broaching execution;
- low costs, and the
- possibility to use current broaches

## Claims

1. A system (10) for the internal broaching of a cylindrical bore (20) of a piece to be machined; the system (10) comprising a broach (40) and a piece bearing table (50), which is suited to support the piece (30) to be machined; the system being **characterised in that** guiding and coupling means (60) are arranged between said broach (40) and said piece bearing table (50), so as to guide said broach (40) during the broaching process to which said piece (30) is subject.

2. A system (10) according to Claim 1, wherein the guiding and coupling means (60) comprise slits (70) which are obtained on the broach (40) and are able to be coupled to wedges (80) arranged on the piece bearing table (50).

3. A system (10) according to Claim 2, wherein there are three slits (70) and, therefore, also three wedges (80), which are spaced apart of 120°.

4. A system (10) according to Claim 1, wherein the guiding and coupling means (60) comprise slits which are obtained on the piece bearing table and are able to be coupled to wedges arranged on the broach.

## Patentansprüche

1. System (10) zum Innenräumen einer zylindrischen Bohrung (20) eines zu bearbeitenden Werkstücks; wobei das System (10) eine Räumnadel (40) und einen Werkstückhaltetisch (50) aufweist, der zum Tragen des zu bearbeitenden Werkstückes geeignet ist, wobei das System **dadurch gekennzeichnet ist, dass** Führungs- und Verbindungsmittel (60) zwischen der Räumnadel (40) und dem Werkstückhaltetisch (50) angeordnet sind, um die Räumnadel (40) während des Räumvorgangs zu führen, welchem das Werkstück (30) unterworfen wird.

2. System (10) nach Anspruch 1, wobei die Führungs- und Verbindungsmittel (60) Schlitze (70) aufweisen, die an der Räumnadel (40) vorgesehen sind, und mit Keilen (80) gekoppelt werden können, die an dem Werkstückhaltetisch (50) angeordnet sind.

3. System (10) nach Anspruch 2, wobei drei Schlitze und daher auch drei Keile (80) vorgesehen sind, die um 120° voneinander beabstandet sind.

4. System (10) nach Anspruch 1, wobei die Führungs- und Verbindungsmittel (60) Schlitze aufweisen, die an den Werkstückhaltetisch vorgesehen werden und die mit Keilen gekoppelt werden können, welche an der Räumnadel angeordnet sind.

## Revendications

1. Système (10) pour le brochage interne d'un alésage cylindrique (20) d'une pièce à usiner ; le système (10) comprenant une broche (40) et une table porte-pièce (50), qui est adaptée pour soutenir la pièce (30) à usiner ; le système étant **caractérisé en ce que** des moyens de guidage et de couplage (60) sont agencés entre ladite broche (40) et ladite table porte-pièce (50) de sorte à guider ladite broche (40) pendant le processus de brochage auquel ladite pièce (30) est soumise.

2. Système (10) selon la revendication 1, dans lequel les moyens de guidage et de couplage (60) comprennent des fentes (70) qui sont obtenues sur la broche (40) et sont capables d'être couplées aux coins (80) agencés sur la table porte-pièce (50).

3. Système (10) selon la revendication 2, dans lequel il y a trois fentes (70) et par conséquent, également trois coins (80) qui sont espacés de 120°.

4. Système (10) selon la revendication 1, dans lequel les moyens de guidage et de couplage (60) comprennent des fentes qui sont obtenues sur la table porte-pièce et sont capables d'être couplées aux coins agencés sur la broche.
